## Europäisches Patentamt
## European Patent Office
## Office européen des brevets

(19)

(11) Numéro de publication: **0 053 969**
**B1**

(12)

# FASCICULE DE BREVET EUROPEEN

(45) Date de publication du fascicule du brevet:
**16.01.85**

(51) Int. Cl.⁴: **B 60 B 27/00**, B 60 K 17/30

(21) Numéro de dépôt: **81401873.5**

(22) Date de dépôt: **26.11.81**

(54) **Dispositif de support pour roue motrice et directrice de véhicule automobile.**

(30) Priorité: **05.12.80 FR 8026147**

(43) Date de publication de la demande:
**16.06.82 Bulletin 82/24**

(45) Mention de la délivrance du brevet:
**16.01.85 Bulletin 85/3**

(84) Etats contractants désignés:
**DE GB IT**

(56) Documents cités:
**FR - A - 1 380 561**
**FR - A - 1 390 345**
**FR - A - 2 407 398**
**GB - A - 19 035**
**GB - A - 1 343 516**

(73) Titulaire: **SOCIETE ANONYME AUTOMOBILES CITROEN, 117 à 167, Quai André Citroen, F-75747 Paris Cedex 15 (FR)**
Titulaire: **AUTOMOBILES PEUGEOT, 75, avenue de la Grande Armée, F-75116 Paris (FR)**

(72) Inventeur: **Chandioux, André, 22, rue Jean Maridor, F-75015 Paris (FR)**

(74) Mandataire: **Boivin, Claude, 9, rue Edouard-Charton, F-78000 Versailles (FR)**

ACTORUM AG

## Descriptions

La présente invention concerne un dispositif de support pour roue motrice et directrice de véhicule automobile comprenant un moyeu creux constituant l'élément extérieur d'un joint universel à billes, par exemple du type RZEPPA, dont l'élément intérieur est solidaire d'un arbre d'entraînement, une pièce d'étanchéité en tôle étant prévue à l'extrémité ouverte du moyeu, opposée au joint.

Un dispositif de ce genre est décrit dans le brevet FR-A-1 380 561. Dans ce dispositif, la pièce d'étanchéité est constituée par une simple tôle munie d'un rebord et emmanchée dans l'extrémité ouverte du moyeu.

Le brevet GB-A-1 343 516 présente également un dispositif du genre indiqué ci-dessus, dans lequel le disque de frein est fixé sur le moyeu du même côté que la roue.

On connait par ailleurs des dispositifs dans lesquels le disque de frein peut être centré et la roue précentrée par un prolongement cylindrique d'un flasque d'entraînement de la roue.

La présente invention a pour objet un dispositif de support pour roue directrice et motrice de véhicule automobile, du type de celui présenté par GB-A-1 343 516 et dans lequel le disque de frein est centré d'une manière particulièrement simple et économique, qui permet à la fois un gain de matière et, par suite, de poids, tout en évitant un usinage de la portée du disque de frein.

Le dispositif selon l'invention est caractérisé en ce que la pièce d'étanchéité présente la forme d'un bol dont l'extrémité fermée est emmanchée dans le moyeu creux et dont la longueur est telle que l'autre extrémité, de diamètre extérieur sensiblement égal au diamètre intérieur du disque de frein, débouche hors du moyeu creux et travers le disque en centrant celui-ci.

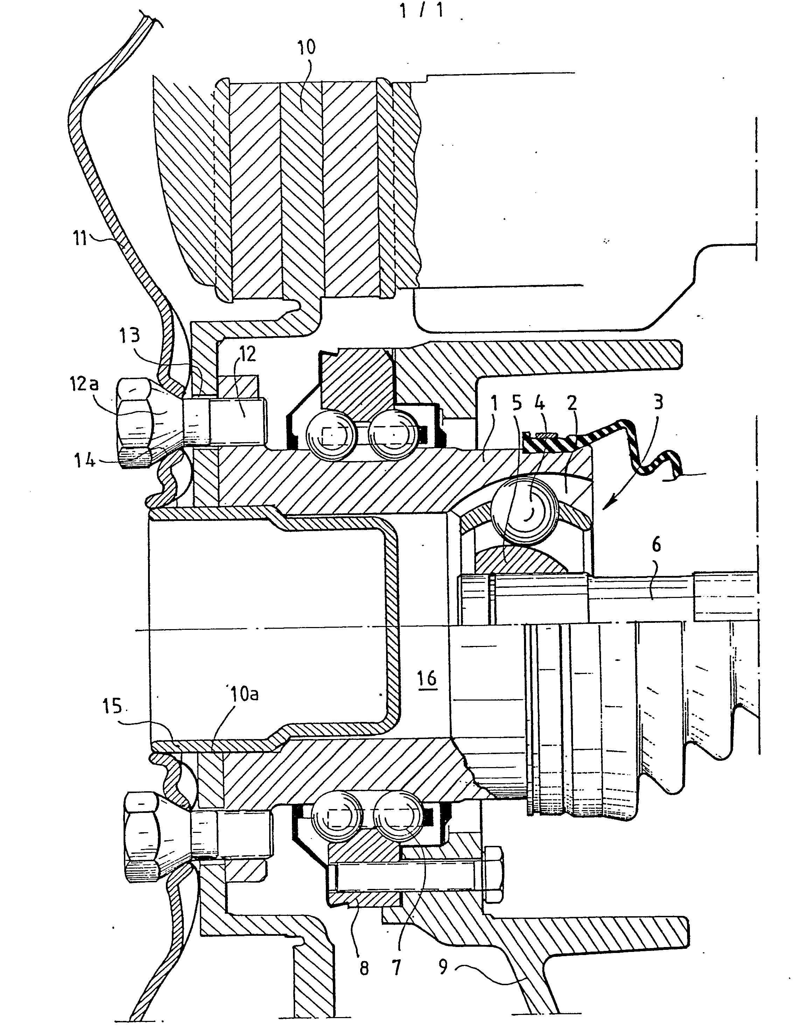

On a décrit ci-après, à titre d'exemple non limitatif, un mode de réalisation du dispositif de support selon l'invention, avec référence à la figure unique du dessin annexé qui en est une vue en coupe axiale.

Le dispositif de support conforme à l'invention comporte un moyeu de roue creux 1, sur la surface interne duquel sont usinées des pistes 2 de manière à constituer l'élément extérieur d'un joint universel 3 à billes 4, par exemple du type RZEPPA, dont l'élément intérieur 5 est solidaire d'un arbre de transmission 6. Le moyeu 1 est supporté au moyen d'un roulement à billes 7 dont la bague intérieure est constituée par le moyeu tandis que sa bague extérieure 8 est solidaire d'un support 9.

Un disque de frein 10 et une roue 11 sont fixés sur le moyeu 1 par des vis 12 à tête conique 12a qui traversent des ouvertures 13 du disque de frein et des ouvertures coniques 14 de la roue. Une pièce d'étanchéité 15 en tôle emboutie est prévue à l'extrémité ouverts du moyeu opposée au joint.

La pièce d'étanchéité 15 a la forme d'un bol dont l'extrémité fermée est emmanchée dans l'ouverture 16 du moyeu 1. Elle présente un diamètre extérieur sensiblement égal au diamètre de l'ouverture 10a du disque de frein 10 et a une longueur telle que, une fois emmanchée à l'intérieur du moyeu 1, elle dépasse d'une quantité au moins égale à l'épaisseur de l'empilage formé par le disque de frein 10 et le voile de la roue 11.

Lors du montage, le disque de frein 10 est emmanché et centré sur la pièce d'étanchéité 15 sur laquelle la roue 11 est ensuite précentrée. L'ensemble est alors fixé sur le moyeu 1 au moyen des vis de fixation 12 vissées dans le moyeu, le disque 10 étant serré entre ce moyeu et la roue 11 dont le centrage final est réalisé au moyen des têtes coniques 12a des vis 12 coopérant avec les ouvertures coniques 14 de la roue.

Il va de soi que la présente invention ne doit pas être considérée comme limitée au mode de réalisation décrit et représenté.

## Revendications

1. Dispositif de support pour roue motrice et directrice de véhicule automobile comprenant un moyeu creux (1) constituant l'élément extérieur d'un joint universel (3) à billes dont l'élément intérieur (5) est solidaire d'un arbre d'entraînement (6), une pièce d'étanchéité (15) en tôle étant prévue à l'extrémité ouverte du moyeu, opposée au joint, et un disque de frein (10) étant fixé sur le moyeu (1) du même côté que la roue (11), caractérisé en ce que la pièce d'étanchéité (15) présente la forme d'un bol dont l'extrémité fermée est emmanchée dans le moyeu creux (1) et dont la longueur est telle que l'autre extrémité, de diamètre extérieur sensiblement égal au diamètre de l'ouverture (10a) du disque de frein (10), débouche hors du moyeu creux (1) et traverse le disque en centrant celui-ci.

2. Dispositif selon la revendication 1, caractérisé en ce que la roue (11) est précentrée sur ladite autre extrémité de la pièce d'étanchéité (15).

3. Dispositif selon la revendication 2, dans lequel la roue (11) est montée fixée sur le moyeu (1) au moyen de vis (12) caractérisé en ce que, de manière connue en soi, le disque (10) est disposé entre le moyeu (1) et la roue (11) et fixé au moyen des vis de fixation (12) de la roue.

## Patentansprüche

1. Lageranordnung für das Antriebs- und Lenkrad eines Automobils mit einer Hohlnabe (1), welche den Aussenteil eines Kugelkardangelenkes (3) bildet, dessen Innenteil (5) mit einer Antriebswelle (6) verbunden ist, mit einem Dichtelement (15) aus Blech, das am offenen dem Gelenk gegenüberliegenden Ende der Nabe angeordnet ist, und mit einer Bremsscheibe (10), welche an der Nabe (1) an derselben Seite wie das Rad (11) befestigt ist, dadurch gekennzeichnet, dass das Dichtelement (15) die Form einer Schale aufweist, deren geschlossenes Ende in die Hohlnabe (1) eingesetzt und deren Länge so bemessen ist, dass das andere Ende mit seinem Durchmesser, der annähernd gleich dem Durchmesser der Öffnung (10a) der Bremsscheibe (10) ist, ausserhalb der Hohlnabe (1) mündet und die Scheibe durchdringt, wobei diese zentriert wird.

2. Lageranordnung nach Anspruch 1, dadurch gekennzeichnet, dass das Rad (11) an diesem anderen Ende des Dichtelementes (15) vorzentriert ist.

3. Lageranordnung nach Anspruch 2, bei welchem das Rad (11) auf der Nabe (1) mittels Schrauben (12) montiert wird, dadurch gekennzeichnet, dass die Scheibe (10) in an sich bekannter Weise zwischen der Nabe (1) und dem Rad (11) angeordnet und mittels der Befestigungsschrauben (12) des Rades eingespannt ist.

## Claims

1. A device for supporting a motor vehicle drive and steering wheel comprising a hollow hub (1) forming the outer element of a universal ball joint (3) whose inner element (5) is integral with a drive shaft (6), a sealing piece (15) made from metal sheet being provided at the open end of the hub, opposite the joint, and a brake disk (10) being fixed on the hub (1) on the same side as the wheel (11), characterized in that the sealing piece (15) has the shape of a bowl whose closed end is fitted into the hollow hub (1) and whose length is such that the other end, of an outer diameter substantially equal to the diameter of the opening (10a) of the brake disk (10), extends beyond the hollow hub (1) and passes through the disk while centering it.

2. Device according to claim 1, characterized in that the wheel (11) is pre-centered on said other end of the sealing piece (15).

3. Device according to claim 2, in which the wheel (11) is fixedly mounted on the hub (1) by means of screws (12), characterized in that, in a manner known per se, the disk (10) is disposed between the hub (1) and the wheel (11) and is fixed by means of the fixing screws (12) of the wheel.